# EUROPÄISCHE PATENTSCHRIFT

(11) **EP 1 111 215 B1**
(45) Veröffentlichungstag und Bekanntmachung des Hinweises auf die Patenterteilung: **08.09.2004**
(21) Anmeldenummer: 99125498.8
(22) Anmeldetag: 21.12.1999
(51) Int. Cl.: F01P 7/16, G05D 23/13

(54) **Thermostateinheit für einen Kühlkreislauf**
Thermostat assembly for a cooling circuit
Ensemble de thermostat pour un circuit de refroidissement

(43) Veröffentlichungstag der Anmeldung: 27.06.2001
(73) Patentinhaber: Ford Global Technologies, Inc., Dearborn, Michigan 48331 (US)
(72) Erfinder: Ley, Matthias, 51371 Leverkusen (DE); Schomer, Frank Wilhelm, 52074 Aachen (DE); Zimmer, Uwe, 53505 Altenahr (DE)
(74) Vertreter: Bonsmann, Manfred, Dipl.-Ing.

(56) Entgegenhaltungen:
- DE-A- 2 923 523
- GB-A- 2 321 957
- US-A- 4 748 941
- PATENT ABSTRACTS OF JAPAN vol. 011, no. 028 (M-557), 27. Januar 1987 (1987-01-27) & JP 61 201816 A (DAIHATSU MOTOR CO LTD), 6. September 1986 (1986-09-06)

## Beschreibung

Die vorliegende Erfindung betrifft eine Thermostateinheit für die temperaturabhängige Verteilung eines von einer wärmequelle, insbesondere von einem Motor, kommenden Kühlmittels auf verschiedene Kühlkreisläufe, enthaltend ein Dehnstoffelement, welches eine von der Temperatur des Kühlmittels abhängiges Volumen annimmt, sowie ein durch die Volumenänderung des Dehnstoffelementes betätigtes Ventil zur Umlenkung des Kühlmittels.

Zahlreiche Maschinen und Geräte benötigen eine Kühlung zur Ableitung der bei ihrem Betrieb erzeugten Abwärme. Beispielhaft hierfür seien im folgenden Verbrennungsmotoren von Kraftfahrzeugen betrachtet.

Verbrennungsmotoren müssen gekühlt werden, damit sich im Motor gleichmäßigere Betriebstemperaturen einstellen und hierdurch die Effizienz des Motors gesteigert wird sowie Belastungen des Motors minimiert werden. Dabei werden bei Personenkraftwagen heutzutage in der Regel Systeme mit Flüssigkeitskühlung eingesetzt, bei welchen eine Kühlflüssigkeit durch Hohlräume im Motorblock und in den Zylinderköpfen geleitet wird. Bei der Flüssigkeit handelt es sich üblicherweise um mit Gefrierschutzadditiven versetztes Wasser. Im Rahmen der nachfolgenden Beschreibung soll jedoch unter dem Begriff Kühlmittel allgemein ein Fluid verstanden werden, das heißt sowohl eine Flüssigkeit als auch ein Gas. Das Kühlmittel wird im Motor entweder durch Konvektion (Thermosiphonkühlung) oder vorzugsweise aktiv durch eine Kühlmittelpumpe umgewälzt. Dabei wird das Kühlmittel außerhalb des Motors an Einrichtungen vorbeigeführt, in welchen es die vom Motor übertragene Wärme wieder abgeben kann. Hierbei kann es sich zum einen um die Heizungsanlage für den Fahrgastinnenraum handeln, so dass die Abfallwärme des Motors nutzbringend für die Heizung und Klimatisierung eingesetzt werden kann. Hauptsächlich findet die Abkühlung des Kühlmittels jedoch im sogenannten (Haupt-)Kühler statt, in welchem das Kühlmittel zwecks Wärmeaustausch auf eine große Fläche verteilt und diese Fläche durch die Umgebungsluft luftgekühlt wird.

Das Kühlmittel soll indes nicht ständig durch den Hauptkühler geleitet werden, da zum Beispiel beim Warmlaufen eines gerade gestarteten Motors noch überhaupt keine Wärme abzuführen ist. In diesem Zustand wäre es im Gegenteil sogar nachteilig, dem Motor Wärme zu entziehen, da dieser dadurch seine optimale Betriebstemperatur später erreichen würde. Zudem ginge die Wärme im Hauptkühler einer eventuellen Beheizung des Fahrgastraumes verloren. Aus diesen Gründen wird im Kreislauf des Kühlmittels eines Motors ein Thermostat angeordnet, welches in Abhängigkeit von der Temperatur des Kühlmittels dieses auf verschiedene Leitungen bzw. Kreisläufe verteilt. Insbesondere wird der Kreislauf durch den Hauptkühler gesperrt, wenn die Temperatur des Kühlmittels unter einem bestimmten Schwellwert liegt.

Die üblicherweise für diesen Zweck eingesetzten Thermostate enthalten ein sogenanntes Dehnstoffelement, welches im Strom des Kühlmittels angeordnet wird und daher dessen Temperatur annimmt. Das Dehnstoffelement ändert in Abhängigkeit von seiner Temperatur sein Volumen bzw. seine Länge, wobei diese Volumen- bzw. Längenänderung zur Betätigung eines Aktuators verwendet werden kann, welcher die gewünschte Verteilung des Kühlmittels bewirkt. In der Regel stellt das Dehnstoffelement dabei ein entsprechend in Verzweigungspunkten der Kreisläufe angeordnetes Ventil um.

Dehnstoffelemente enthalten typischerweise eine Wachsfüllung, welche bei einer bestimmten Temperatur (zum Beispiel 88°C) schmilzt und dabei eine erhebliche Volumenausdehnung erfährt. Diese Ausdehnung baut in einem geschlossenen Gefäß einen Druck auf, welcher zur Bewegung eines Kolbens ausgenutzt werden kann. Der Kolben kann dann seinerseits mit einem druckbelasteten Ventilteller verbunden werden, so dass die Bewegung des Kolbens das Ventil gegen den Federdruck öffnet beziehungsweise schließt. Ein Thermostat der zuletzt beschriebenen Art wird zum Beispiel in der DE 32 40 939 A1 offenbart. Eine Weiterentwicklung eines derartigen Ventils wird in der DE 35 05 835 A1 beschrieben, wobei an dem Dehnstoffelement eine elektrische Heizung angeordnet wird, um in Abhängigkeit von verschiedenen Rahmenbedingungen wie zum Beispiel der Außentemperatur Einfluss auf das Temperaturniveau am Dehnstoffelement und damit auf das Regelverhalten und den Arbeitspunkt des Thermostates nehmen zu können.

Für die Anordnung von Thermostaten der oben beschriebenen Art in einem Kühlmittelkreislauf sind im Stand der Technik zwei Möglichkeiten bekannt, nämlich die Anordnung im Kühlmittelabfluss und im Kühlmittelzufluss. Die Bezeichnungen "Abfluss" und "Zufluss" sind dabei hier und im folgenden in Bezug auf den zu kühlenden Motor gewählt.

Bei einer Anordnung des Thermostats im Kühlmittelabfluss wird das Thermostat von dem vom Motor kommenden warmen beziehungsweise heißen Kühlmittel umspült. Überschreitet die Temperatur des Kühlmittels den vorgegebenen Grenzwert, so öffnet das Thermostat den Weg zum Hauptkühler, woraufhin im Hauptkühler befindliches kühleres Wasser in den Kreislauf zum Motor eintritt. Dieses kühlere Wasser durchströmt den Motor einmal und gelangt dann über den Kühlmittelabfluss zum Thermostat. Wenn durch die Zufuhr des kalten Kühlmittels die Motortemperatur bereits ausreichend gesenkt werden konnte, kann das Thermostat zu diesen Zeitpunkt den Kreislauf durch den Hauptkühler bereits wieder schließen beziehungsweise drosseln. Nachteilig hieran ist jedoch, dass bis zu dieser Reaktion des Thermostats das kalte Kühlmittel aus dem Hauptkühler einmal komplett den Motor durchlaufen muss. Während der gesamten Durchlaufzeit bleibt der Kreislauf durch den Hauptkühler geöffnet, so dass eine entsprechend große Menge kalten Kühlmittels in den Kühlkreislauf eingeführt wird. Dies führt zu einer ausgeprägten Absenkung der Temperatur des Kühlmittels, wodurch unerwünscht hohe Schwankungen in der Betriebstemperatur des Motors auftreten.

Man ist daher dazu übergegangen, das Thermostat im Kühlmittelzufluss zum Motor anzuordnen. Dies hat den Vorteil, dass der Regelung die Temperatur des in den Motor eintretenden Kühlmittels zugrunde gelegt wird. Wenn daher der Zustand eintritt, dass das Thermostat den Kreislauf über den Hauptkühler öffnet, so fließt das aus dem Hauptkühler kommende kalte Kühlmittel unmittelbar über das Thermostat in den Motor. Das Thermostat kann daher sofort auf den Zufluss kalten Kühlmittels reagieren, das heißt den Kreislauf über den Hauptkühler wieder schließen beziehungsweise ihn drosseln. Auf diese Weise wird ein zu starkes Abfallen der Motortemperatur verhindert, und es können insgesamt gleichmäßigere Betriebstemperaturen des Motors aufrecht erhalten werden. Diese insofern vorteilhafte Anordnung des Thermostaten im Kühlmittelzufluss hat jedoch andere Nachteile. So befindet sich das Kühlmittel im Hauptkühler ständig unter Druck, da der Verschluss des Kreislaufs durch den Hauptkühler erst hinter dem Auslass des Hauptkühlers, nämlich im Zufluss zum Motor, erfolgt. Dies kann zu Problemen mit der Abdichtung des Systems führen, wenn nicht besonders stark ausgelegte Leitungen verwendet werden. Weiterhin treten Probleme bei Füllen des Kühlsystems auf, da in diesem Falle Gas in den Leitungen vom Hauptkühler zum Motor gefangen werden kann.

Ferner ist aus der US 4 748 941 eine Thermostateinheit bekannt, bei der sich ein Dehnstoff-Element im Kühlmittelzufluss zum Motor befindet und über einen Kolbenmechanismus mit zwei Ventilen im Kühlmittelabfluss gekoppelt ist. Die Ventile kontrollieren den Fluss vom Motor kommenden Kühlmittels zu einem Kühler beziehungsweise durch einen Bypass zurück zum Motor, wobei eine starre Kopplung mit einem reziproken öffnungsverhalten der Ventile besteht. Das Dehnstoff-Element ist bei geöffnetem Bypass einer Mischung aus direkt vom Motor kommendem sowie vom Kühler kommendem Kühlmittel ausgesetzt, während es bei geschlossenem Bypass nur von dem vom Kühler kommenden Kühlmittel umgeben ist. Die vom Dehnstoff-Element erfasste Temperatur unterliegt daher erheblichen Schwankungen.

Aufgabe der vorliegenden Erfindung war es, einen Thermostat der eingangs genannten Art derart zu verbessern, dass die Schwankungen der Betriebstemperatur im Motor reduziert werden und der Kühlkreislauf weniger aufwendig und weniger störanfällig ausgestaltet werden kann.

Diese Aufgabe wird gemäß Anspruch 1 durch eine Thermostateinheit für die temperaturabhängige Verteilung des von einem wärmeproduzierenden Element, insbesondere von einem Motor, kommenden Kühlmittels auf verschiedene Kühlkreisläufe gelöst, welche ein Dehnstoffelement enthält, das ein von der Temperatur in dem Kühlmittel abhängiges Volumen annimmt, sowie ein Ventil zur Umlenkung des Kühlmittels, welches durch die Volumenänderung des Dehnstoffelementes betätigt wird. Das Dehnstoffelement ist im Kühlmittelzufluss zum Motor und das Ventil im Kühlmittelabfluss vom Motor angeordnet. Die Thermostateinheit ist dadurch gekennzeichnet, dass das Dehnstoffelement und das Ventil durch ein zumindest abschnittsweise gut wärmeleitfähiges mechanisches Verbindungselement thermisch gekoppelt werden, und dass die Thermostateinheit ein unter Federbelastung in die Schließstellung gedrücktes Bypass-Ventil enthält, welches bei Überdruck im Kühlmittelabfluss vom Motor einen Kurzschluss zum Kühlmittelzufluss zum Motor öffnet.

Grundlage der Erfindung ist also, dass die Temperatur im Kühlmittelzufluss zum Motor erfasst wird. Hierdurch kann der Vorteil von Kühlsystemen mit einem Thermostaten im Kühlmittelzufluss erreicht werden, das heißt, dass das Thermostat schnell auf eine Änderung der Temperatur des Kühlmittels reagieren kann und somit insgesamt die Betriebstemperaturen des Motors ohne größere Schwankungen in einem engen Bereich hält. Gleichzeitig ist jedoch das Ventil im Kühlmittelabfluss vom Motor angeordnet, so dass diesbezüglich die Vorteile der Systeme erhalten werden, bei denen das gesamte Thermostat im Kühlmittelabfluss sitzt. Insbesondere wird hierdurch erreicht, dass der Hauptkühler eingangsseitig abgetrennt wird, so dass während der Zeiten, in denen der Hauptkühler nicht in Gebrauch ist, das im Hauptkühler befindliche Kühlmittel auch nicht unter Druck steht. Dies bedeutet eine geringe Belastung und eine geringere Störanfälligkeit des Hauptkühlers. Gleichzeitig können die Leitungssysteme zum und im Hauptkühler mit einer geringeren Stärke ausgelegt werden, was entsprechende Ersparnisse in den Herstellungskosten mit sich bringt. Weiterhin hat die Anordnung des Ventils im Abfluss vom Motor (beziehungsweise an der Eingangsseite des Hauptkühlers) den Vorteil, dass beim Füllen des Hauptkühlers mit Kühlmittel die Ausgangsleitung des Hauptkühlers zum Motor hin offen ist, so dass dort befindliches Gas über entsprechende Entgasungseinrichtungen am Motor entweichen kann. Durch die erfindungsgemäße Anordnung des Temperatursensors im Kühlmittelzufluss zum Motor und des Ventils im Kühlmittelabfluss vom Motor können somit die Vorteile der beide aus dem Stand der Technik bekannten grundsätzlichen Arten der Anordnung erzielt und gleichzeitig deren spezifische Nachteile vermieden werden.

Dabei kommt bei dem erfindungsgemäßen Thermostat hinzu, dass es sich hierbei vorzugsweise um ein vollständig mechanisches System handelt, welches aus dem Dehnstoffelement und dem damit mechanisch gekoppelten Ventil besteht. Es sind demnach keine elektrischen Elemente erforderlich, welche zusätzlichen Verkabelungsaufwand erfordern würden und einer großen Störanfälligkeit (Undichtigkeitsgefahren infolge der erforderlichen Führung der elektrischen Leitungen nach außen sowie Kontaktschwierigkeiten) unterliegen. Vielmehr greift die erfindungsgemäße Thermostateinheit auf die bekannten und bewährten Elemente, insbesondere auf Dehnstoffelemente zurück.

Die Thermostateinheit ist gemäß Anspruch 2 vorzugsweise in einem Gehäuse angeordnet, welches Anschlüsse für die Kühlmittelleitungen zum und vom Motor sowie für die Kühlmittelleitungen zu und von einem Hauptkühler aufweist. Durch die Anordnung des gesamten Thermostaten in einem Gehäuse wird ein kompakter Aufbau der Regelungseinheit für den Kühlmittelfluss erzielt. Gleichzeitig gewährleistet das Gehäuse die Möglichkeit, eine einstellbare thermische Kopplung zwischen den Ein- und Ausgängen der Kühlmittelkreisläufe herzustellen. Hierdurch kann das Regelungsverhalten des Systems durch konstruktive Maßnahmen gezielt beeinflusst werden.

Das Dehnstoffelement und das Ventil werden durch ein zumindest abschnittsweise gut wärmeleitfähiges mechanisches Verbindungselement gekoppelt. Bei der erfindungsgemäßen Thermostateinheit befindet sich das Ventil im Kühlmittelabfluss vom Motor und das Dehnstoffelement im Kühlmittelzufluss zum Motor. Das Ventil liegt somit im Betrieb auf höherem Temperaturniveau als das Dehnstoffelement. Durch die mechanische Kopplung zwischen Dehnstoffelement und Ventil über das Verbindungselement, zum Beispiel einen Stab, wird die Kraftübertragung vom Dehnstoffelement auf das Ventil bewirkt. Gleichzeitig kann das Verbindungselement jedoch auch für eine thermische Kopplung zwischen dem Kühlmittelabfluss und dem Kühlmittelzufluss des Motors genutzt werden. Zu diesem Zweck wird das Verbindungselement mit einer geeigneten Wärmeleitfähigkeit ausgelegt, wobei zumindest Abschnitte des Verbindungselementes gut wärmeleitend sein sollten, um den schnellen Transport der Wärme vom Kühlmittelabfluss zum Kühlmittelzufluss gewährleisten zu können. Typischerweise wird das Verbindungselement daher ganz oder teilweise aus Metall hergestellt. Gleichzeitig kann jedoch durch schlechter wärmeleitende Zwischenstücke, zum Beispiel aus Kunststoff, oder durch entsprechende Ummantelungen des Verbindungselementes der Wärmefluss durch das Verbindungselement in gewünschter Weise begrenzt werden.

Der Wärmefluss vom höheren Temperaturniveau (Kühlmittelabfluss) zum tieferen Temperaturniveau (Kühlmittelzufluss), wo sich das Dehnstoffelement befindet, sorgt dafür, dass das Dehnstoffelement auch einem einstellbaren Einfluss seitens des Kühlmittelabflusses unterliegt. Wenn daher zum Beispiel bei hohen Drehzahlen sehr viel Wärme vom Motor abzuführen ist und somit die Temperatur im Kühlmittelabfluss sehr hoch ist, so hat dies selbst dann Auswirkungen auf das Dehnstoffelement, wenn sich dieses in einem Strom sehr kalten, vom Hauptkühler kommenden Kühlmittels befindet. Durch die thermische Kopplung über das Verbindungselement kann daher das Regelungsverhalten des Dehnstoffelementes quasi kontinuierlich zwischen den beiden Extremen eines komplett im Kühlmittelzufluss (unteres Temperaturniveau) oder im Kühlmittelabfluss (oberes Temperaturniveau) befindlichen Temperatursensors eingestellt werden.

Bei einer Weiterentwicklung der Erfindung kann nach Anspruch 4 im Bereich des Kühlmittelabflusses vom Motor eine Entgasungsöffnung angeordnet sein. Über diese Entgasungsöffnung kann Kühlmittel zu einem Ausgleichsbehälter fließen, in welchem eine Beseitigung von eventuell vorhandenen Gasblasen aus dem Kühlmittel erfolgt. Die Rückleitung vom Entgasungsbehälter in den Kühlmittelkreislauf erfolgt in der Regel direkt in den Einlass der Pumpe, welche das Kühlmittel umwälzt. Durch die genannte Entgasungsöffnung kann auch dann Luft aus dem Kühlsystem entweichen, wenn dieses zum Beispiel nach einer Werkstattreparatur neu mit Kühlmittel gefüllt wird. Dabei kann, da der Hauptkühler ausgangsseitig nicht durch ein Ventil verschlossen ist, insbesondere auch die im Hauptkühler enthaltene Luft komplett aus dem Kühlsystem entfernt werden.

Bei dem Dehnstoffelement handelt es sich nach Anspruch 5 vorzugsweise um eine mit Wachs gefüllte Patrone, welche einen nach außen führenden verschiebebeweglichen Kolbenstempel enthält. Derartige Elemente sind bekannt und zeichnen sich durch ihre hohe Robustheit und Zuverlässigkeit aus.

Die erfindungsgemäße Thermostateinheit kann weiterhin gemäß Anspruch 6 auch die Anschlüsse für die Leitung des Kühlmittels zu einer Innenraumheizung enthalten. Die vom Motor abgeführte Wärme kann dazu verwendet werden, im Bedarfsfalle den Innenraum des Fahrzeuges zu heizen, um für die Fahrgäste ein angenehmes Klima herzustellen. Dadurch, dass die Anschlüsse für eine derartige Innenraumheizung an der erfindungsgemäßen Thermostateinheit angeordnet werden, wird insgesamt eine kompakte Einheit für die gesamte Steuerung des Kühlmittelkreislaufes geschaffen. Weiterhin wird hierdurch gewährleistet, dass der Einfluss des zusätzlichen Wärmeentzuges durch die Innenraumheizung von der Thermostateinheit mit erfasst werden kann. Die Innenraumheizung führt daher nicht zu einem unkontrollierbaren Wärmeentzug aus dem Kühlmittel, sondern ihr Beitrag zur Kühlleistung kann vom erfindungsgemäßen Thermostaten bei der Regelung des Stromes durch den Hauptkühler berücksichtigt werden. Weiterhin kann auf diese Weise optional erreicht werden, dass das Ventil den Kühlmittelstrom in seiner Verteilung zwischen Hauptkühler und Innenraumheizung steuert, also etwa den Zufluss zur Innenraumheizung schließt, wenn zum Beispiel bei hohen Drehzahlen das Kühlmittel sehr heiß ist und eine schnelle Wärmeabfuhr über den Hauptkühler erforderlich ist. Hierdurch kann die Innenraumheizung vor Schäden geschützt werden. Die Thermostateinheit enthält ein unter Federbelastung in die Schließstellung gedrücktes Bypass-Ventil, welches bei Überdruck im Kühlmittelabfluss vom Motor einen Kurzschluss zum Kühlmittelzufluss zum Motor öffnet. Ein derartiges Bypass-Ventil hat vor allem eine Sicherungsfunktion. Sollte es aus irgendwelchen Gründen zu einem unerwartet hohen Druckanstieg im Kühlmittelabfluss vom Motor kommen, welcher nicht über die Leitung zum Hauptkühler abgebaut werden kann, so sorgt das Bypass-Ventil für einen unmittelbaren Ausgleich der Druckdifferenz zwischen Kühlmittelabfluss und Kühlmittelzufluss. Dies beugt Schäden vor, die durch den erhöhten Druck in anderen Teilen des Kühlsystems, zum Beispiel der Entgasungsleitung oder der Innenraumheizung, entstehen könnten.

Weiterhin ist bei der Erfindung vorteilhaft, daß infolge der Anordnung des Ventils im Kühlmittelabfluß des Motors der Kühler während der Aufwärmphase oder Warmfahrphase nicht mit dem Kühlmitteldruck beaufschlagt wird. Dies führt zu einer geringen Belastung des entsprechenden Bereiches des Kühlsystems, da sowohl der Kühler als auch Schläuche im kalten Zustand besonders anfällig für Undichtigkeiten sind.

Weiterhin bietet die Möglichkeit einer Blockage des Zuflusses zum Kühler während der Aufwärmphase deutliche Vorteile, da dann keinerlei Wärme vom Motor an den Fahrzeugkühler abgegeben werden kann. Derartige Wärmeverluste, die bei einlaßseitig montierten Systemen nach dem Stande der Technik im Bereich von 1-2 kW liegen können, entfallen. Da die fühlende Einheit des Thermostatsystems im Kühlmittelzufluß zum Motor angeordnet ist, liegen die auftretenden zeitlichen Temperaturschwankungen im Motor auf einem niedrigen Niveau. Große thermische Schwankungen werden vermieden. Zudem werden hohe Druckbelastungen während der Aufwärmphase (wenn das Thermostat noch geschlossen ist) im Wärmetauscher der Fahrzeugheizung bei Einsatz eines federbelasteten integrierten Überströmventils vermieden, da in Abhängigkeit von der Druckbelastung und den Federeigenschaften Kühlmittel direkt vom Motorauslaß zum Motorzulaß geführt werden kann.

Bei einer bevorzugten Ausführungsform der Erfindung sind alle Schlauchanschlüsse des Motors - mit Ausnahme des Rücklaufes vom Ausgleichsbehälter, welcher systembedingt direkt vor der Wasserpumpe liegen muß - in einer Gehäuseeinheit zusammengefaßt. Dadurch ist nur eine Flanschabdichtung zum Motor hin und nur eine Montageoperation in der Fertigung erforderlich, was geringe Kosten mit sich bringt. Ein weiterer Vorteil besteht darin, daß eine für die Vermischung der Kühlströme vor dem Motor günstige Plazierung der einzelnen Anschlüsse möglich ist.

Im folgenden wird die Erfindung unter Bezugnahme auf die beigefügten Zeichnungen beispielhaft erläutert. Es zeigen:
- Fig. 1: eine perspektivische Ansicht einer erfindungsgemäßen Thermostateinheit;
- Fig. 2: eine Seitenansicht der Thermostateinheit nach Figur 1;
- Fig. 3: einen Schnitt entlang der Linie III-III von Figur 2;
- Fig. 4a: das Schema eines Kühlmittelkreislaufs nach dem Stand der Technik;
- Fig. 4b: das Schema eines erfindungsgemäßen Kühlmittelkreislaufs.

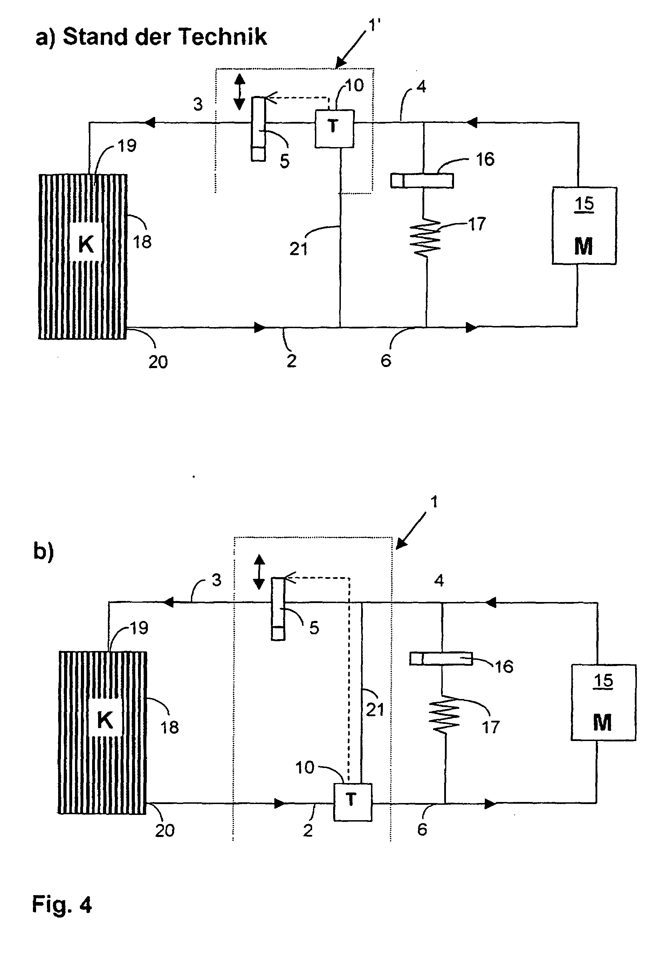

Zunächst soll unter Bezugnahme auf Figur 4a ein Kühlmittelsystem für ein Kraftfahrzeug gemäß dem Stand der Technik beschrieben werden. Das Kühlmittelsystem mit der Thermostateinheit 1' dient dazu, Abfallwärme von einem Verbrennungsmotor 15 abzuführen. Zu diesem Zweck wird ein Kühlmittel, vorzugsweise Wasser, über einen Kühlmittelzufluss 6 dem Motor 15 zugeführt, den es über einen Kühlmittelabfluss 4 erwärmt wieder verlässt.

Das erwärmte Kühlmittel kann dann auf verschiedenen Wegen zum Motor zurückfließen. Zum einen besteht die Möglichkeit, dass es über einen Wärmetauscher 17 für eine Innenraumheizung geführt wird, damit die Abwärme des Motors für eine Heizung der Fahrgastkabine genutzt werden kann. Dieser Weg kann über ein steuerbares Ventil 16 geöffnet und geschlossen werden und steht nur dann zur Verfügung, wenn eine Beheizung des Fahrzeuges gewünscht ist. Weiterhin kann eine zirkulation über eine Kurzschlussleitung 21 stattfinden, welche insbesondere über einen Ausgleichsbehälter (nicht dargestellt) zur Entgasung des Kühlmittels führen kann. Ein derartiger Kurzschluss des Kühlmittelkreislaufs ist zum Beispiel beim Starten und Warmlaufen des Motors sinnvoll, wenn eine Abfuhr von Motorwärme nicht erwünscht ist, da der Motor möglichst schnell seine optimale Betriebstemperatur erreichen soll.

Beim Dauerbetrieb des Motors ist dann jedoch in der Regel eine größere Wärmemenge abzuführen. Dies geschieht über eine (Haupt-)Kühler 18, an welchem ein Wärmeübertritt aus dem Kühlmittel in die Umgebungsluft stattfindet. Der Kreislauf durch den Kühler 18 wird von der Thermostateinheit 1' überwacht und nur dann geöffnet, wenn eine Kühlung notwendig ist. Der Einlaß des Kühlers 18 ist mit 19 bezeichnet, und der Auslaß des Kühlers trägt die Bezugsziffer 20. Der Abfluß des Kühlers ist mit 2 bezeichnet. Bei der in Figur 4a dargestellten Variante ist die Thermostateinheit 1' im Kühlmittelabfluss 4 vom Motor 15 angeordnet. Ein Temperatursensor 10, bei welchem es sich um ein Dehnstoffelement handelt, erfasst somit die Temperatur des heißen, vom Motor kommenden Kühlmittels. Übersteigt diese Temperatur einen Schwellwert von typischerweise 85°C bis 90°C, so findet eine Volumenänderung des Dehnstoffelementes statt, welche auf ein Ventil 5 übertragen wird und dazu führt, dass dieses einen mit 3 bezeichneten Zufluss zum Kühler 18 öffnet. Das heiße Kühlmittel wird somit über den Kühler 18 geführt und gelangt abgekühlt über den Zufluss 6 zum Motor 15 zurück.

Diese Anordnung hat jedoch den Nachteil, dass kaltes, im Kühler 18 befindliches Kühlmittel in den Motor 15 gelangen und dort zu einem Temperaturschock führen kann, das heißt zu einer plötzlichen Absenkung der Motortemperatur. Dies stellt verständlicherweise eine erhebliche Belastung für den Motor 15 dar. Erst wenn das kalte Kühlmittel den Motor 15 über den Kühlmittelabfluss 4 wieder verlässt und zum Dehnstoffelement 10 kommt, kann letzteres auf die eingetretene Temperaturabsenkung im Motor 15 reagieren. Bis zu diesem Zeitpunkt bleibt jedoch über das Ventil 5 der Kreislauf über den Kühler 18 geöffnet. Bei der in Figur 4a dargestellten Anordnung der Thermostateinheit 1' sind somit verhältnismäßig große Schwankungen der Betriebstemperatur des Motors 15 zu beobachten.

Um die genannten Schwankungen zu verringern, ist es bekannt, die gesamte Thermostateinheit 1' in der Leitung des Kühlmittelzuflusses 6 zum Motor 15 anzuordnen (nicht dargestellt). Bei dieser Anordnung ist sichergestellt, dass das Dehnstoffelement die Temperatur erfasst, die das Kühlmittel beim Eintritt in den Motor 15 hat. Wenn daher aus dem Kühler 18 besonders kaltes Kühlmittel nachgeliefert wird, kann das Dehnstoffelement hierauf schnell durch ein Drosseln beziehungsweise Schließen des Kreislaufes über den Kühler 18 reagieren. Auf diese Weise können die Temperaturschwankungen im Motor 15 reduziert werden. Der genannte Vorteil ist jedoch mit anderen Nachteilen zu erkaufen. So findet das Schließen des Kreislaufes über den Kühler 18 durch das Ventil 5 in der Ausgangsleitung 2 des Kühlers 18 statt, so dass der gesamte Kühler 18 auch dann dem Druck des Kühlmittels ausgesetzt ist, wenn er gar nicht am Kreislauf beteiligt ist. Um diesen Belastungen standzuhalten, müssen der Kühler 18 und die Leitungen hierzu entsprechend stabil ausgelegt werden, was höhere Herstellungskosten mit sich bringt. Weiterhin führt das Verschließen des Abflusses 2 des Kühlers 18 durch das Ventil zu Problemen bei der Entgasung des Kühlers 18. Wenn nämlich der Kühler 18 zum Beispiel nach einem Werkstattaufenthalt des Fahrzeuges wieder mit Kühlmittel befüllt wird, wird dieses Kühlmittel von oben, das heißt vom Einlass 19 her, eingefüllt. Der im Kühler 18 ansteigende Flüssigkeitsstand führt dabei zu einem Verschluss des Auslasses 20, welcher sich am unteren Ende des Kühlers 18 befindet. Luft, die sich in der anschließenden Leitung 2 befindet, wird somit gefangen, da das Ende der Leitung 2 durch das (im kalten Zustand geschlossene) Ventil verschlossen ist. Da andererseits Gas im Kühlmittelkreislauf eines Kraftfahrzeuges nicht toleriert werden kann, weil es durch Verhinderung der Wärmeabfuhr zu einer Zerstörung des Motors führen kann, sind aufwendige Maßnahmen zu ergreifen, um die Entgasung der Leitung 2 sicherzustellen. So wird zum Beispiel bei der Erstbefüllung des Kühlers 18 zunächst ein Vakuum im Kühler erzeugt, welches dann von der eingefüllten Kühlflüssigkeit ausgefüllt wird. Es ist offensichtlich, dass es sich hierbei um ein sehr aufwendiges Verfahren handelt.

Das erfindungsgemäße Thermostat ist in Figur 4b dargestellt und vermeidet die oben geschilderten Probleme eines ganz in dem Kühlmittelabfluss 4 beziehungsweise im Kühlmittelzufluss 6 angeordneten Thermostates 1', behält jedoch andererseits die jeweiligen Vorteile dieser Anordnungen bei. Erfindungsgemäß wird nämlich der Temperatursensor 10 im Kühlmittelzufluss 6 und das Ventil 5 im Kühlmittelabfluss 4 angeordnet. Hierdurch wird erreicht, dass der Regelung die Temperatur des Kühlmittels am Eingang des Motors zugrunde gelegt wird, so dass hohe Temperaturschwankungen und der Kälteschock des Motors vermieden werden können. Gleichzeitig erfolgt jedoch die Auswirkung der Regelung, nämlich das Öffnen und Schließen der Leitung über den Hauptkühler 18, im Kühlmittelabfluss 4. Hierdurch wird gewährleistet, dass der Kühler 18 bei Nichtgebrauch nicht unter Druck steht. Dies reduziert die Störanfälligkeit des Systems und erlaubt eine kostengünstigere Konstruktion des Kühlers 18. Weiterhin kann es nicht zu den oben geschilderten Problemen mit der Entgasung bei einem Befüllen des Kühlers 18 kommen, da in der Leitung 2 befindliches Gas ungehindert über die Entgasungsleitung 21 abgeführt werden kann.

Das erfindungsgemäße Thermostat 1 besteht vorzugsweise aus einem Dehnstoffelement 10, welches mit dem Ventil 5 vorzugsweise mechanisch gekoppelt ist. Durch die Kopplung wird ein hohes Temperaturniveau und hohes Druckniveau (Ventil 5) mit einem niedrigen Temperaturniveau und niedrigen Druckniveau (Dehnstoffelement 10) verbunden, das heißt, dass thermisch und hydrostatisch unterschiedliche Räume gekoppelt werden. Durch eine kompakte Unterbringung der Thermostateinheit 1 (gepunktet dargestellter Rahmen in Figur 4b) ist es dabei ferner möglich, bezüglich der Temperatur eine gewisse Mischung der Zustände im Kühlmittelabfluss 4 und im Kühlmittelzufluss 6 einzustellen. Das heißt, dass je nach konstruktiver Auslegung eine mehr oder weniger große Wärmeübertragung vom Kühlmittelabfluss 4 auf das Dehnstoffelement 10 stattfindet und dieses somit auch eine Rückkopplung über die Temperatur im Kühlmittelabfluss erhält. Anders als beim Stand der Technik lassen sich hierdurch auch solche Situationen korrekt beherrschen, bei welchen kaltes Kühlmittel aus dem Kühler 18 in den Motor 15 einfließt, gleichzeitig jedoch zum Beispiel aufgrund hoher Drehzahlen eine hohe Wärmeabfuhr erforderlich ist und somit sehr heißes Kühlmittel aus dem Motor abfließt. In einem solchen Falle wäre es ungünstig, den Kreislauf über den Hauptkühler 18 zu schließen, was jedoch von einem Thermostaten im Kühlmittelzufluss nach dem Stand der Technik getan würde. Dies kann mit der erfindungsgemäßen Thermostateinheit vermieden werden.

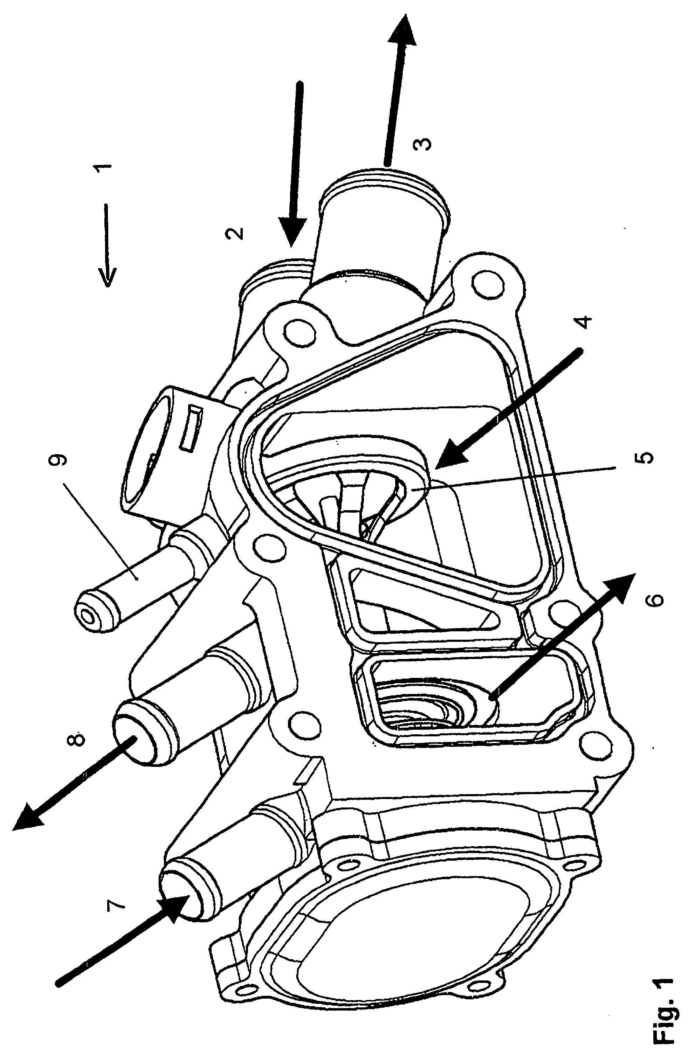

Im folgenden wird mit Hilfe der Figuren 1 bis 3 ein konkretes Ausführungsbeispiel für eine erfindungsgemäße Thermostateinheit 1 beschrieben. Figur 1 zeigt eine perspektivische Ansicht einer solchen Einheit. Zu erkennen sind der Einlass 4 für vom Motor kommendes heißes Kühlmittel sowie der zum Motor beziehungsweise zur Pumpe zurückführende Kühlmittelabfluss 6. Die Verbindung zum Motor beziehungsweise zum Zylinderkopf kann somit über eine einzige abzudichtende Kontaktfläche hergestellt werden. Weiterhin sind in Figur 1 der Zufluss 3 zum Hauptkühler sowie der Rückfluss 2 vom Hauptkühler, der Zufluss 8 zum Innenraumwärmetauscher beziehungsweise der Rückfluss 7 vom Innenraumwärmetauscher sowie eine Entgasungsleitung 9 zum Ausgleichsbehälter erkennbar.

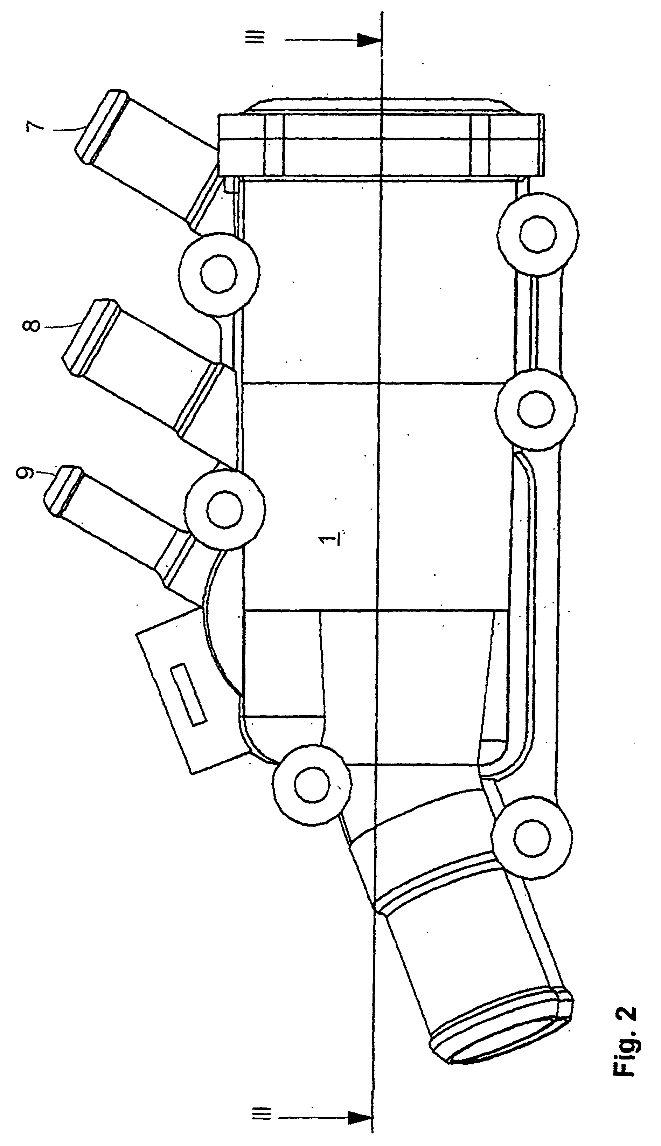

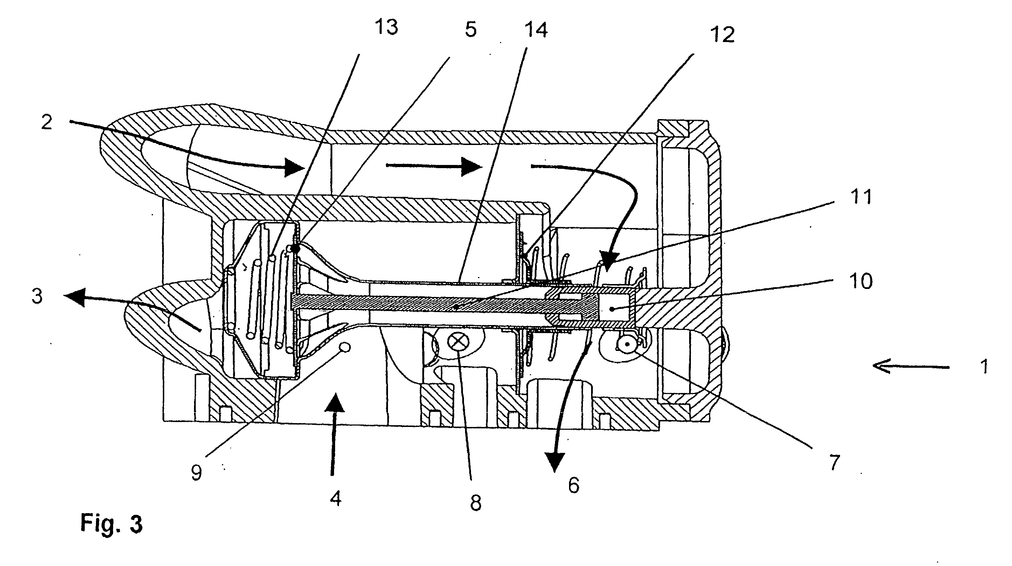

Figur 2 zeigt eine Seitenansicht auf die Thermostateinheit 1 (von der Rückseite in Bezug auf Figur 1 gesehen). Hierbei ist insbesondere die Lage des Schnittes III-III zu erkennen, welcher in Figur 3 dargestellt ist.

In dem Schnitt nach Figur 3 ist zunächst der Zufluss 4 für heißes Kühlwasser vom Motor zu erkennen. Der Zufluss führt in eine erste Kammer in der Thermostateinheit 1, welche verschiedene Auslasse besitzt. Dabei handelt es sich zunächst um den Entlüftungsauslass 9, welcher zu einem Ausgleichsbehälter und von hier zurück zur Pumpe führt. Dieser Weg ist in der Regel immer offen und erlaubt eine ständige Zirkulation des Kühlmittels. Weiterhin befindet sich an der ersten Kammer der Auslass 8, der zu einer Innenraumheizung führt. Wenn der Fahrgastraum geheizt werden soll, kann Kühlflüssigkeit über diesen Auslass entnommen werden, welche dann über den Rückfluss 7 in den Kreislauf des Kühlmittels zurückgeführt wird.

Der Rückfluss 7 befindet sich als Eingang in einer zweiten Kammer der Thermostateinheit 1. Diese zweite Kammer ist auf der einen Seite mit einer vom Hauptkühler kommenden Zuleitung 2 verbunden. Auf der anderen Seite mündet die zweite Kammer in den Kühlmittelzufluss 6 zum Motor. Wie durch Pfeile angedeutet ist, kann somit vom Hauptkühler kommendes Kühlmittel durch die zweite Kammer über die Kühlmittelzuleitung 6 zum Motor fließen. In der zweiten Kammer befindet sich ferner als fühlendes Element beziehungsweise als Temperatursensor ein Dehnstoffelement 10. Hierbei handelt es sich um eine (schematisch dargestellte) Patrone, bei der ein schmelzbarer Wachs in einem Kolbenraum angeordnet ist, wobei der Kolbenraum durch einen verschiebebeweglichen Kolben mit einer Kolbenstange 11 geschlossen wird. Wenn die Schmelztemperatur des Wachses (typischerweise 88°C) überschritten wird, schmilzt das Wachs und es kommt zu einer entsprechenden Volumenvergrößerung. Hierdurch wird die Kolbenstange 11 (in der Figur nach links) verschoben.

Die Kolbenstange 11 führt in die oben erläuterte erste Kammer und weist an ihrem Ende einen Ventildeckel eines Ventils 5 auf. Der Ventildeckel liegt im geschlossenen Zustand des Ventils auf einem Ventilsitz auf. Er wird gegen diesen Ventilsitz durch eine Feder 13 gedrückt. Bei einer Ausdehnung des Dehnstoffelementes 10 kommt es zu einer Verschiebung der Kolbenstange 11 (nach links), so dass sich das Ventil 5 gegen die Kraft der Feder 13 öffnet. Hierdurch wird ein Abfluss 8 aus der ersten Kammer geöffnet, der zum Hauptkühler führt. Das heißt, dass bei Überschreiten der Schmelztemperatur am Dehnstoffelement 10 der Kreislauf des Kühlmittels über den Hauptkühler geöffnet wird.

Das in diesem Falle aus dem Hauptkühler kommende Kühlmittel strömt unmittelbar an dem Dehnstoffelement 10 vorbei. Wenn es sich hierbei um sehr kaltes Kühlmittel handelt (z.B. weil es vorher im Kühler gestanden hat oder weil sehr tiefe Außentemperaturen herrschen), kann somit das Dehnstoffelement sofort hierauf reagieren und den Kreislauf über den Hauptkühler wieder schließen. Auf diese Weise wird ein Temperaturschock im Motor vermieden.

Dadurch, dass das Ventil 5 in der Zuleitung 3 zum Hauptkühler sitzt, kann der Hauptkühler im entsprechenden Fall eingangsseitig vom Kühlmittelkreislauf abgekoppelt werden. Belastungen und Störfälle am Hauptkühler werden somit vermieden. Weiterhin hat das erfindungsgemäße Thermostat 1 den Vorteil, dass bei einem Befüllen des Hauptkühlers dort befindliches Gas über die Leitung 3, welche in der Regel vom unteren Ende des Kühlers kommt, entweichen kann. Dieses Gas kann nämlich durch die Thermostateinheit 1 und den Motor in die Entgasungsleitung 9 gelangen und dort aus dem Kühlmittelkreislauf entfernt werden. Wäre das Ventil in der vom Hauptkühler kommenden Leitung 7 angeordnet, so wäre dies nicht möglich. Die Anordnung des Ventils 5 in der Zuleitung zum Hauptkühler hat ferner den Vorteil, dass beim Warmlaufen des Motors kein Kühlmittel in die Sackgassenleitung zum Hauptkühler fließen kann, was zu einem nicht unerheblichen Wärmeverlust führen kann.

Figur 3 ist weiterhin entnehmbar, dass die Kolbenstange 11 von einem Blechzylinder 14 umgeben ist, welcher endseitig mit dem Ventilsitz verbunden ist und Fenster enthält, durch welche das Kühlmittel strömen kann. Durch diese Fenster kann das vom Motor kommende heiße Kühlmittel somit insbesondere durch das Ventil 5 strömen, wenn dieses geöffnet ist. Ferner kann das heiße Kühlmittel auch die Kolbenstange 11 umspülen und damit erwärmen. Über die Wärmeleitung der Kolbenstange findet dann eine Übertragung dieser Temperatur zu dem Dehnstoffelement 10 statt. Das heißt, dass durch konstruktive Maßnahmen eine thermische Kopplung zwischen dem Kühlmittelabfluss 4 und dem Kühlmittelzufluss 6 stattfinden kann. Thermisch gesehen ist das Wachselement 10 somit nicht ausschließlich im Kühlmittelzufluss zum Motor angeordnet. Vielmehr kann durch konstruktive Maßnahmen eine einstellbare thermische Mischung zwischen dem Temperaturniveau am Kühlmittelabfluss 4 und am Kühlmittelzufluss 6 stattfinden. Um diese Mischung und damit ein gewünschtes Regelverhalten einzustellen, könnte zum Beispiel im Zwischenraum zwischen der Kolbenstange 11 und dem sie umgebenden zylindrischen Blechkörper 14 ein (nicht dargestelltes) Stopfelement beziehungsweise eine Isolierung vorgesehen werden. Die Thermostateinheit 1 kann auf diese Weise auch an die Verhältnisse verschiedener Motoren angepasst werden.

Die beiden eingangs beschriebenen Kammern in der Thermostateinheit 1 werden durch ein Bypass-Ventil 12 voneinander getrennt. Dieses Ventil 12 wird gegen die Kraft einer Feder in der geschlossenen Stellung gehalten. Sollte jedoch der Druck in der ersten Kammer, die mit dem Kühlmittelabfluss vom Motor verbunden ist, zu groß werden, so kann das Bypass-Ventil öffnen und einen unmittelbaren Druckaustausch zur zweiten Kammer, das heißt zum Kühlmittelzufluss 6, ermöglichen. Hierdurch kann insbesondere die Innenraumheizung vor einem überhöhten Druck geschützt werden, welcher zum Beispiel beim Warmlaufen des Motors auftreten kann, wenn bei hohen Drehzahlen das Ventil 5 noch geschlossen ist.

## Patentansprüche

1. Thermostateinheit (1) für die temperaturabhängige Verteilung eines von einer Wärmequelle von einem Motor (15), kommenden Kühlmittels auf verschiedene Kühlkreisläufe, enthaltend ein Dehnstoffelement (10), welches ein von der Temperatur im Kühlmittel abhängiges Volumen annimmt, sowie ein durch die Volumenänderung des Dehnstoffelementes betätigtes Ventil (5) zur Umlenkung der Kühlflüssigkeit,
wobei das Dehnstoffelement (10) im Kühlmittelzufluss (6) zum Motor (15) und dass das Ventil (5) im Kühlmittelabfluss (4) vom Motor angeordnet ist,
**dadurch gekennzeichnet, dass** das Dehnstoffelement (10) und das Ventil (5) durch ein zumindest abschnittsweise gut wärmeleitfähiges mechanisches verbindungselement (11) thermisch gekoppelt sind, wobei die thermische Kopplung in Hinblick auf ein gewünschtes Regelungsverhalten des Dehnstoffelementes (10) eingestellt ist,
und dass ein unter Federbelastung in die Schließstellung gedrücktes Bypass-Ventil (12) vorhanden ist, welches bei Überdruck im Kühlmittelabfluss (4) vom Motor einen Kurzschluss zum Kühlmittelzufluss (6) zum Motor öffnet.

2. Thermostateinheit nach Anspruch 1,
**dadurch gekennzeichnet, dass** sie in einem Gehäuse angeordnet ist, welches Anschlüsse für die Kühlmittelleitungen (4, 6) zum und vom Motor (15) sowie die Kühlmittelleitungen (2, 3) zu und von einem Hauptkühler (18) aufweist.

3. Thermostateinheit nach einem der Ansprüche 1 oder 2,
**dadurch gekennzeichnet, dass** das mechanische Verbindungselement (11) ganz oder teilweise aus Metall besteht.

4. Thermostateinheit nach einem der Ansprüche 1 bis 3,
**dadurch gekennzeichnet, dass** im Kühlmittelabfluss (4) vom Motor (15) eine Entgasungsöffnung (9) angeordnet ist.

5. Thermostateinheit nach einem der Ansprüche 1 bis 4,
**dadurch gekennzeichnet, dass** das Dehnstoffelement eine mit Wachs gefüllte Patrone (10) ist, welche einen nach außen führenden verschiebebeweglichen Kolbenstempel (11) enthält.

6. Thermostateinheit nach einem der Ansprüche 1 bis 5,
**dadurch gekennzeichnet, dass** sie Anschlüsse (7, 8) für die Leitung des Kühlmittels zu einer Innenraumheizung (16, 17) enthält.

## Claims

1. A thermostatic unit to be used for the temperature dependent distribution of cooling agent from a heat source in an engine (15) to different cooling systems, consisting of a temperature sensitive component (10) made of an flexible material, which can accommodate a specific volume depending on the measured temperature of the cooling agent, as well as the outlet valve (5) which results in the change in volume of the elastic-type component which leads to the reversal of the cooling fluid, and in so doing the flexible component (10) is set up to receive the incoming flow of the cooling agent (coolant) (6) to the engine (15) and the vent (5) (outlet/valve) is set up to receive the outgoing flow of the cooling agent from the engine, these being **characterised by** the fact that the flexible component (10) and the outlet valve (5) are thermally coupled by at least one good mechanical heat conductor in sections, in so doing the thermal coupling is adjusted to a preferred adjustment pattern with regard to the changes in the elastic heat sensitive component. (10) and which has a low pressure by-pass valve (outlet) (12), which is under spring tension in the closed position, which when the cooling agent outlet from the engine is exposed to excess pressure (4) opens a short circuit to the intake of the cooling agent to the engine.

2. Thermostat unit, in accordance with Claim 1, **characterised by** the fact, that is set up in its own housing, which has connections to the cooling agent circuit (4, 6) leading to and from the engine (15) in such a way that enables the cooling agent circuit (2, 3) to be directed to the main cooler.

3. Thermostat unit, in accordance with Claims 1 and 2, **characterised by** the fact, that the mechanical connecting component (11) is manufactured either totally or at least partly out of metal.

4. Thermostat unit, in accordance with Claims 1 to 3, **characterised by** the fact, that in the outflow (4) of the cooling agent from the engine (15) there is a degasification opening.

5. Thermostat unit, in accordance with Claims 1 to 4, **characterised by** the fact, that the component made of an elastic-type substance takes the form of a cartridge (10) filled with wax, which contains a piston support (11) which can be displaced by moving outwards.

6. Thermostat unit, in accordance with Claims 1 to 5, **characterised by** the fact, that it contains connections (7, 8) for the pipe work of the cooling agent to an internal heating system. (16,17)

## Revendications

1. Ensemble de thermostat (1) pour répartir sur différents circuits de refroidissement, en fonction de la température, un réfrigérant provenant d'une source de chaleur d'un moteur (15), contenant un élément (10) à matière extensible qui prend un volume fonction de la température dans le réfrigérant, et contenant une soupape (5) pour dévier le liquide de refroidissement, actionnée par la modification de volume de l'élément à matière extensible,
l'élément (10) à matière extensible étant disposé dans l'amenée (6) de réfrigérant au moteur (15) et la soupape (5) étant disposée dans l'évacuation (4) de réfrigérant du moteur,
**caractérisé en ce que** l'élément (10) à matière extensible et la soupape (5) sont couplés thermiquement par un élément de liaison mécanique (11) présentant au moins sectoriellement une bonne conductibilité thermique, le couplage thermique étant réglé en vue d'un comportement souhaité de régulation de l'élément (10) à matière extensible,
et **en ce qu'**une soupape de dérivation (12) pressée dans la position fermée sous la sollicitation d'un ressort est présente, laquelle, en cas de surpression dans l'évacuation (4) de réfrigérant du moteur, ouvre un court-circuitage vers l'amenée (6) de réfrigérant au moteur.

2. Ensemble de thermostat selon la revendication 1, **caractérisé en ce qu'**il est disposé dans un boîtier qui présente des branchements pour les conduites de réfrigérant (4, 6) en provenance et en direction du moteur (15), ainsi que pour les conduites de réfrigérant (2, 3) en provenance et en direction d'un radiateur principal (18).

3. Ensemble de thermostat selon la revendication 1 ou 2, **caractérisé en ce que** l'élément de liaison mécanique (11) est réalisé en totalité ou en partie en métal.

4. Ensemble de thermostat selon l'une des revendications 1 à 3, **caractérisé en ce qu'**une ouverture de dégazage (9) est disposée dans l'évacuation (4) de réfrigérant du moteur (15).

5. Ensemble de thermostat selon l'une des revendications 1 à 4, **caractérisé en ce que** l'élément à matière extensible est une cartouche (10) remplie de cire, qui contient une tige de piston coulissante (11) menant vers l'extérieur.

6. Ensemble de thermostat selon l'une des revendications 1 à 5, **caractérisé en ce qu'**il contient des branchements (7, 8) pour envoyer le réfrigérant à un chauffage d'habitacle (16, 17):
